# EUROPEAN PATENT APPLICATION

(11) **EP 1 031 592 A2**
(43) Date of publication of application: **30.08.2000**
(21) Application number: 99123679.5
(22) Date of filing: 29.11.1999
(51) Int. Cl.: C08G 77/50, C08G 77/48

(54) **Carbosiloxane dendrimer**

(30) Priority: 25.02.1999 JP 4851299
(71) Applicant: Dow Corning Toray Silicone Company, Ltd., Tokyo 100-0005 (JP)
(72) Inventor: Yoshitake, Makoto, Dow Corn. Tory Silicone Co. Ltd, Ichihara-shi Chiba Prefecture (JP); Onodera, Satoshi, Dow Corn. Tory Silicone Co. Ltd., Ichihara-shi Chiba Prefecture (JP)
(74) Representative: Sama, Daniele, Dr.

(57) **Abstract**

A carbosiloxane dendrimer has (i) a highly branched structure in which the siloxane bond and silalkylene bond alternate, (ii) a narrow molecular weight distribution, and (iii) 1 non-radically-polymerizable substituted hydrocarbon group in the molecule. When the carbosiloxane dendrimer contains a condensation-reactive group as the non-radically-polymerizable group, the carbosiloxane dendrimer is useful as a modifier for organic resins and paints.

## Description

### FIELD OF THE INVENTION

This invention relates to a novel carbosiloxane dendrimer. More particularly, this invention relates to a novel carbosiloxane dendrimer that has a highly branched structure in which the siloxane bond and silalkylene bond alternate and whose molecule contains 1 non-radically-polymerizable substituted hydrocarbon group.

### BACKGROUND OF THE INVENTION

A dendrimer is a polymer with a narrow molecular weight distribution and a highly branched structure which elaborates radially from a single core. Dendrimers are characterized by a low viscosity, high reactivity, high solubility, and low glass-transition temperature.

The following are examples of the known organosilicon dendrimers: siloxane dendrimers (Rebrov, et al., *Dokl. Acad. Nauk. SSSR,* 309, 367 (1989) and Masamune, et al., *J. Am. Chem. Soc.,* 112, 7077 (1990)), carbosiloxane dendrimers (Kakimoto, et al., *Macromolecules,* 24, 3469 (1991); Japanese Patent Application Laid Open (Kokai) Number Hei 7-17981 (17,981/1995); and Sheiko, et al., *Macromol. Rapid Commun.*, 17, 283 (1996)), and carbosilane dendrimers (Roovers, et al., *Macromolecules, 26,* 963 (1993)) and Japanese Patent Application Laid Open (Kokai) Number Hei 8-311205 (311,205/1996)). This literature also discloses carbosiloxane dendrimers in which the siloxane bond and silalkylene bond occur in alternation (Japanese Patent Application Laid Open (Kokai) Number Hei 7-17981 and Sheiko et al., *Macromol. Rapid Commun.,* 17,283 (1996)).

In these particular preparative methods, the starting reagent for forming the core structure of the dendrimer is limited to silane compounds bearing a plural number of vinyl or allyl groups bonded to a single silicon atom. In addition, these preparative methods can only produce low-molecular-weight dendrimer at a low number of generations. The synthesis by a one-step polymerization method of highly branched polymer in which the siloxane bond and silalkylene bond alternate has also been disclosed (Mathias, et al., *J. Am. Chem. Soc.,* 113, 4043 (1991)), but this method cannot produce dendrimer with a narrow molecular weight distribution.

The present inventors have already proposed a carbosiloxane dendrimer that solves the limitations indicated above (Japanese Laid Open (Kokai) Patent Application Numbers Hei 10-298288 (298,288/1998) and Hei 11-1485 (1,485/1999)). This carbosiloxane dendrimer has a highly branched structure in which the siloxane bond and silalkylene bond alternate. This carbosiloxane dendrimer also has a narrow molecular weight distribution and can be synthesized in high molecular weights by appropriate execution of its preparative method. However, this dendrimer is limited to a dendrimer containing a radically polymerizable group. A carbosiloxane dendrimer having the aforementioned molecular structural features and a non-radically-polymerizable group is heretofore unknown.

The object of this invention is to provide a novel carbosiloxane dendrimer that has a highly branched structure in which the siloxane bond and silalkylene bond alternate, that has a narrow molecular weight distribution, and whose molecule contains 1 non-radically-polymerizable substituted hydrocarbon group.

### SUMMARY OF THE INVENTION

This invention relates to a carbosiloxane dendrimer with the general formula. 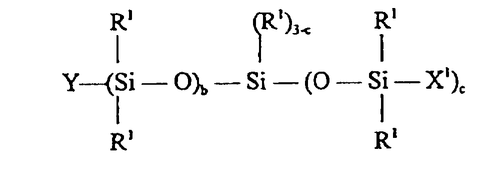 Y is a non-radically-polymerizable substituted hydrocarbon group, R¹ is C₁ to C₁₀ alkyl or aryl, **b** is from 0 to 50, **c** is from 1 to 3, and X¹ is the silylalkyl group with the following formula at **i** = 1 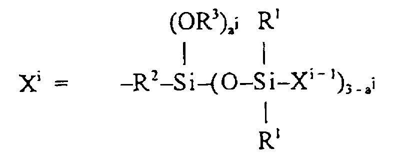
(R¹ is C₁ to C₁₀ alkyl or aryl; R² is C₂ to C₁₀ alkylene; R³ is C₁ to C₁₀ alkyl;
Xⁱ⁺¹ is selected from the set consisting of the hydrogen atom, C₁ to C₁₀ alkyl, aryl, and the above-defined silylalkyl group; **i** is an integer with a value from 1 to 10 that specifies the generation of the said silylalkyl group; and **a**ⁱ is from 0 to 3 with the proviso that **a**¹ in at least one X¹ in each molecule is from 0 to 2).

### BRIEF DESCRIPTION OF THE DRAWINGS

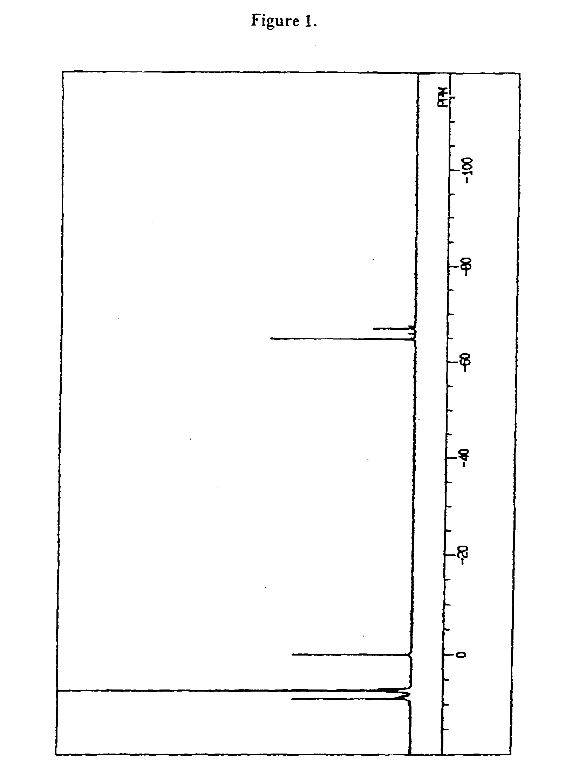

Figure 1 contains the ²⁹Si-nuclear magnetic resonance spectrum of the carbosiloxane dendrimer synthesized in Example 1.

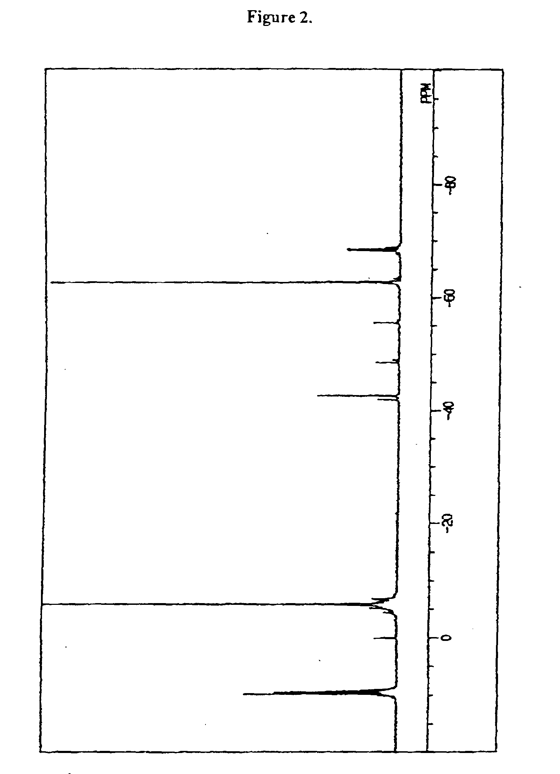

Figure 2 contains the ²⁹Si-nuclear magnetic resonance spectrum of the carbosiloxane dendrimer synthesized in Example 2.

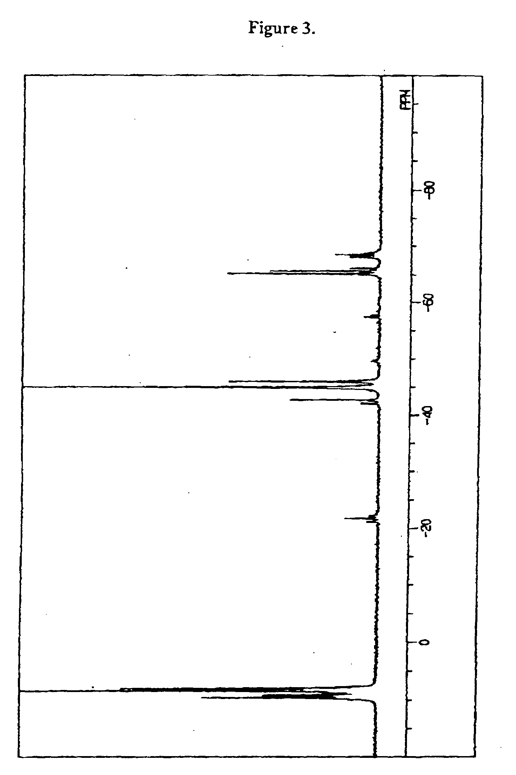

Figure 3 contains the ²⁹Si-nuclear magnetic resonance spectrum of the carbosiloxane dendrimer synthesized in Example 3.

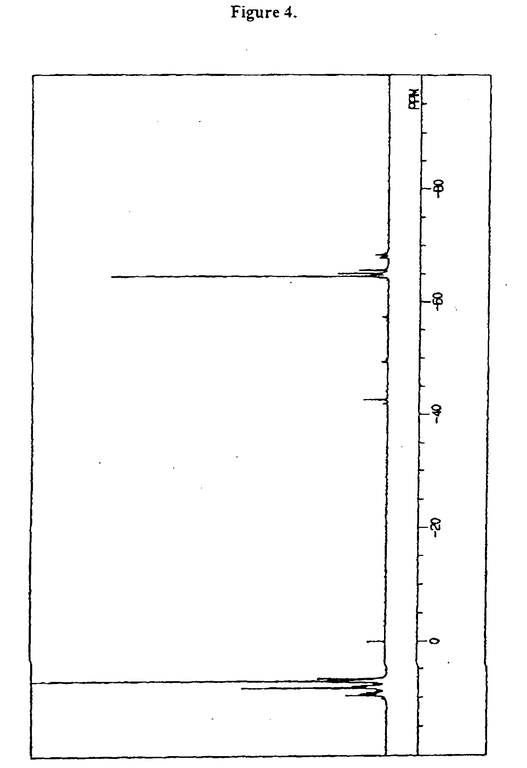

Figure 4 contains the ²⁹Si-nuclear magnetic resonance spectrum of the carbosiloxane dendrimer synthesized in Example 4.

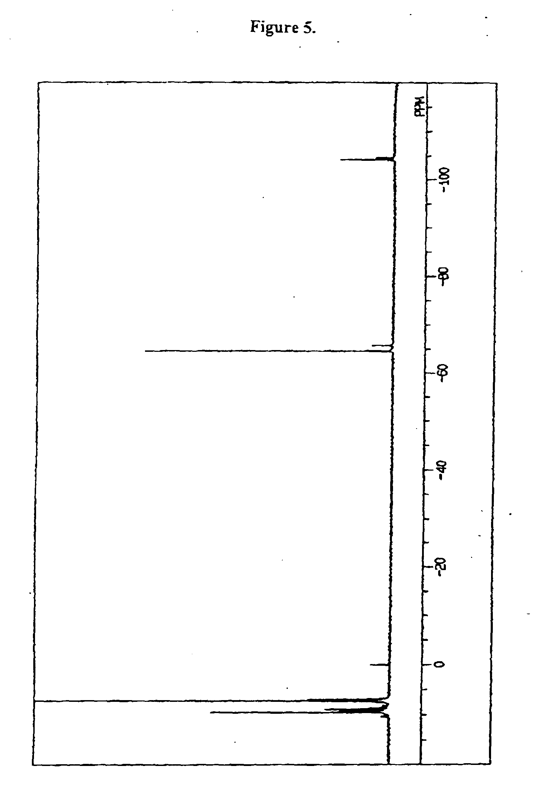

Figure 5 contains the ²⁹Si-nuclear magnetic resonance spectrum of the carbosiloxane dendrimer synthesized in Example 5.

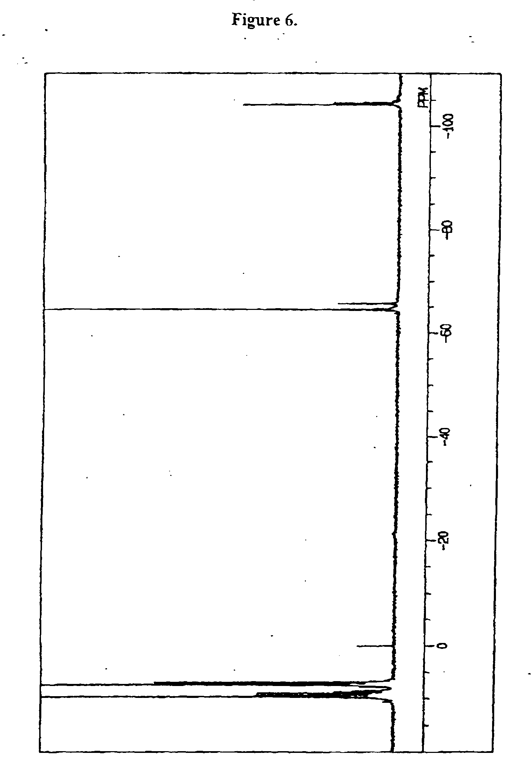

Figure 6 contains the ²⁹Si-nuclear magnetic resonance spectrum of the carbosiloxane dendrimer synthesized in Example 6.

### DETAILED DESCRIPTION OF THE INVENTION

The carbosiloxane dendrimer of this invention has the following general formula. 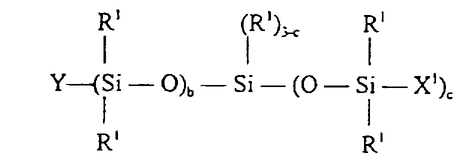 Y is a non-radically-polymerizable substituted hydrocarbon group. This group is preferably bonded to the silicon atom across a carbon atom and preferably contains at least 1 halogen atom or group selected from the set consisting of the alcoholic hydroxyl group, phenolic hydroxyl group, amino group, mercapto group, carboxyl group, nitrile group, cyclic ether-containing groups, noncyclic ether-containing groups, ketone-containing groups, and soups that contain a carboxylic acid ester linkage.

The alcoholic hydroxyl-substituted hydrocarbon groups are exemplified by 3-hydroxypropyl and hydroxymethyl; the phenolic hydroxyl-substituted hydrocarbon groups are exemplified by hydroxyphenyl and hydroxyphenylpropyl; the amino-substituted hydrocarbon groups are exemplified by aminopropyl, aminoethyl, N-butylaminopropyl, N-cyclohexylaminopropyl, N,N-dibutylaminopropyl, and N,N-dibutylaminomethyl; the mercapto-substituted hydrocarbon groups are exemplified by mercaptopropyl and mercaptomethyl; the carboxyl-substituted hydrocarbon groups are exemplified by 3-carboxypropyl and 10-carboxydecyl; the nitrile-substituted hydrocarbon groups are exemplified by 2-cyanoethyl and 3-cyanopropyl; the halogen-substituted hydrocarbon groups are exemplified by 3-chloropropyl, chloromethyl, 3,3,3-trifluoropropyl, p-chloromethylphenethyl, and nonafluorohexyl; the cyclic ether-functional hydrocarbon groups are exemplified by glycidoxypropyl, 5,6-oxiranylbutyl, and tetrahydrofurfuryloxypropyl; the noncyclic ether-functional hydrocarbon groups are exemplified by methoxyethoxypropyl, polyoxyethylenylpropyl, and polyoxypropylenylpropyl; the ketone moiety-containing hydrocarbon groups are exemplified by acetylmethyl and benzoylmethyl; and the hydrocarbon groups containing a carboxylic acid ester linkage are exemplified by 3-acetoxypropyl, ethoxycarbonylpropyl, 3-benzoyloxypropyl, and acetoxymethyl. In addition, substituted hydrocarbon groups containing both alcoholic hydroxyl and an ether moiety are exemplified by hydroxyethoxypropyl and hydroxypropoxy; substituted hydrocarbon groups containing both phenolic hydroxyl and an ether moiety are exemplified by 4-hydroxy-3-methoxyphenylpropyl; and substituted hydrocarbon groups containing both a ketone moiety and a carboxylic acid ester linkage are exemplified by acetylacetoxypropyl and benzoylacetoxypropyl.

R¹ is C₁ to C₁₀ alkyl or aryl. The alkyl encompassed by R¹ is exemplified by methyl, ethyl, propyl, butyl, pentyl, isopropyl, isobutyl, cyclopentyl, and cyclohexyl. The aryl encompassed by R¹ is exemplified by phenyl and naphthyl. Methyl is preferred for R¹.

The subscript **b** is a number from 0 to 50 and is preferably in the range from 0 to 10. The subscript **c** is a number from 1 to 3 and is preferably 2 or 3.

X¹ is the silylalkyl group with the following formula at i = 1. 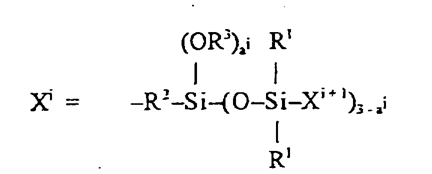 R¹ is defined as above. R² is C₂ to C₁₀ alkylene, for example, straight-chain alkylene such as ethylene, propylene, butylene, and hexylene and branched alkylene such as methylmethylene, methylethylene, 1-methylpentylene, and 1,4-dimethylbutylene. Ethylene, methylmethylene, hexylene, 1-methylpentylene, and 1,4-dimethylbutylene are preferred for R². R³ is C₁ to C₁₀ alkyl, for example, methyl, ethyl, propyl, butyl, pentyl, and isopropyl, among which methyl and ethyl are preferred. Xⁱ⁺¹ is selected from the set consisting of the hydrogen atom, C₁ to C₁₀ alkyl, aryl, and the above-defined silylalkyl group. This C₁ to C₁₀ alkyl and aryl is exemplified as above for R¹.

The subscript **i** is an integer with a value from 1 to 10 that specifies the generation of said silylalkyl group, i.e., that indicates the number of repetitions of this silylalkyl group. Thus, the carbosiloxane dendrimer has the following general formula when the number of generations is 1: 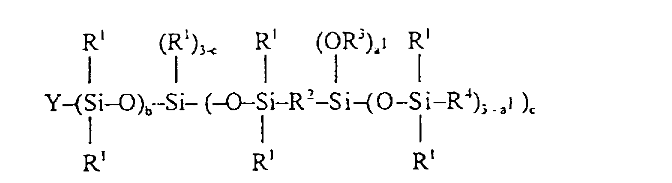 wherein, Y, R¹, R², R³, **b**, and **c** are defined as above; R⁴ is the hydrogen atom or C₁ to C₁₀ alkyl or aryl; **a**¹ is a number from 0 to 3; and at least 1 **a**¹ is a number from 0 to 2.

This carbosiloxane dendrimer has the following general formula when the number of generations is 2: 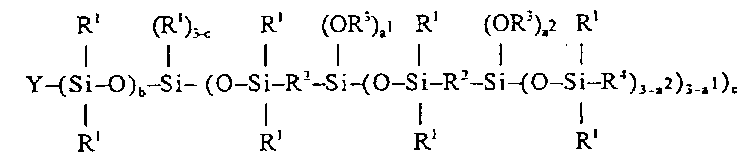 wherein Y, R¹, R², R³, R⁴, **b**, and **c** are defined as above; **a**¹ and **a**² are numbers from 0 to 3; and at least 1 **a**¹ is a number from 0 to 2.

The carbosiloxane dendrimer has the following general formula when the number of generations is 3: 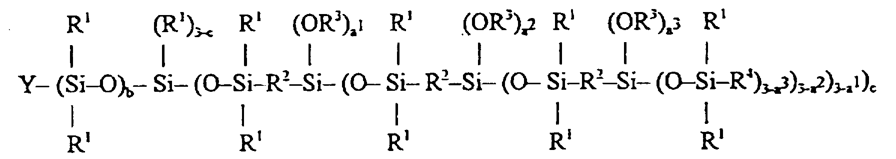 wherein Y, R¹, R², R³, R⁴, **b**, and **c** are defined as above; **a**¹, **a**², and **a**³ are numbers from 0 to 3; and at least 1 **a**¹ is a number from 0 to 2.

The carbosiloxane dendrimer of this invention preferably has a number-average molecular weight (as polystyrene) in the range from 1,000 to 100,000. This carbosiloxane dendrimer may be a single compound or a mixture of 2 or more compounds. Finally, its molecular weight, determined on a polystyrene basis, preferably has a dispersity index no greater than 2, wherein the dispersity index is the ratio between the weight-average molecular weight and the number-average molecular weight or Mw/Mn.

The carbosiloxane dendrimer of this invention is specifically exemplified by polymers with the following average molecular formulas.

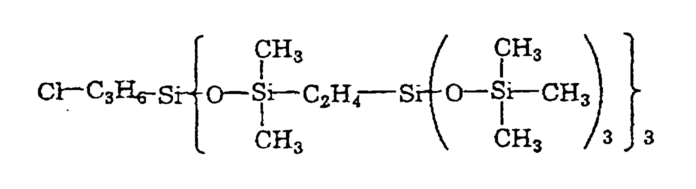

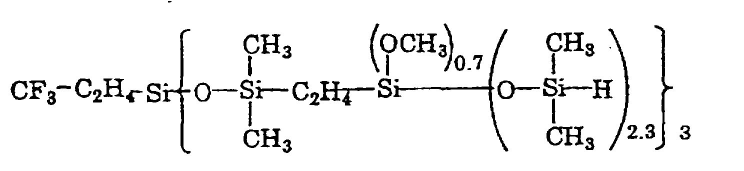

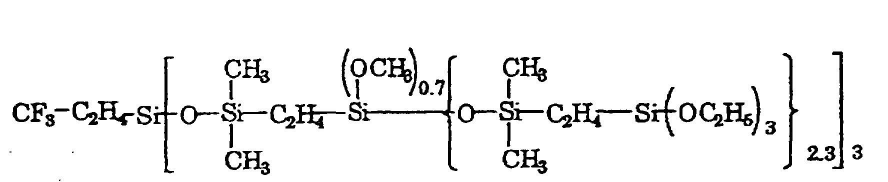

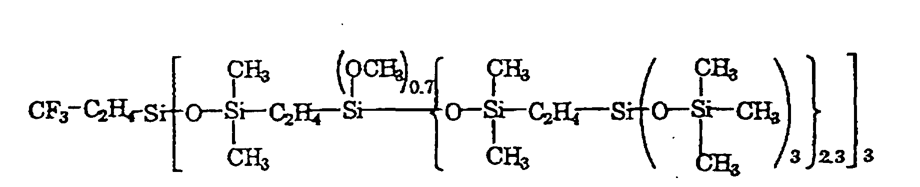

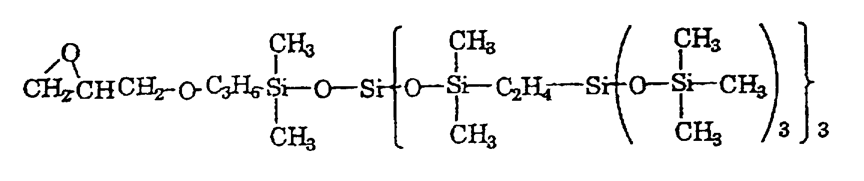

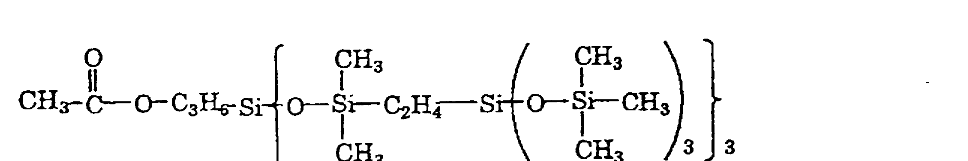

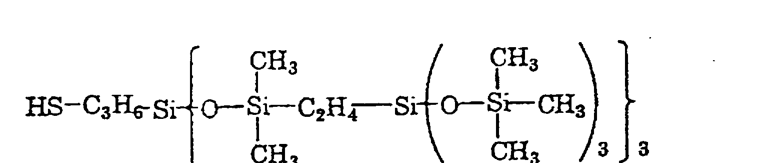

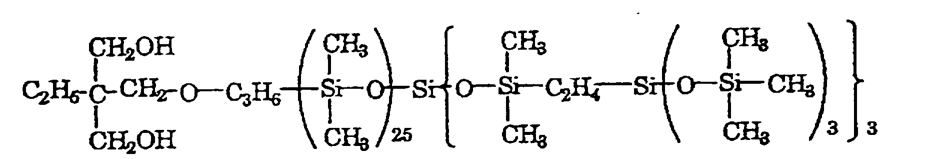

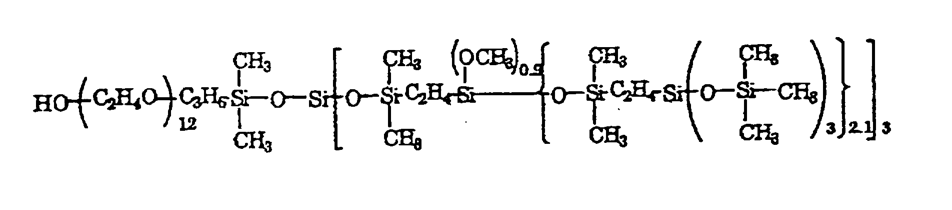

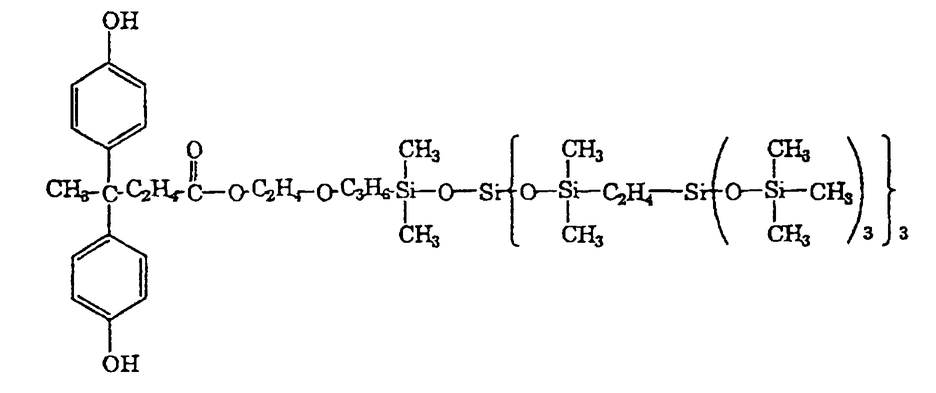

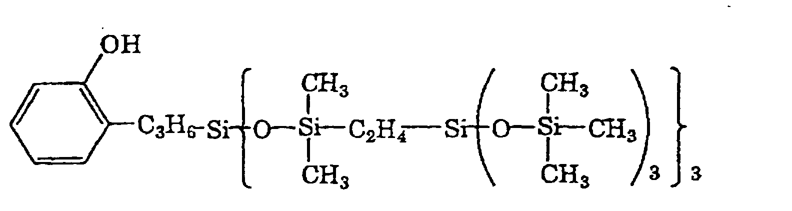

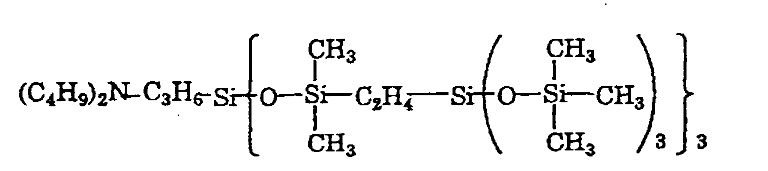

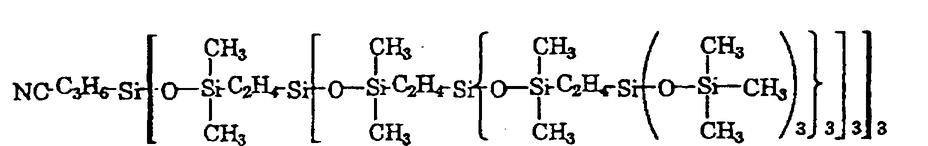

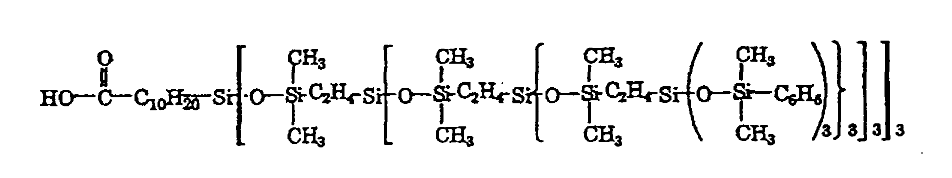

The carbosiloxane dendrimer according to the present invention can be synthesized, for example, by appropriately executing the following processes (A) to (D) using an SiH-functional silicon compound with the following general formula as the starting material. 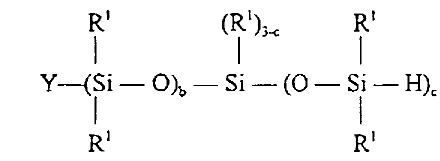 (Y, R¹, **b**, and **c** are defined as above)

### Process (A)

In this process, the aforementioned starting silicon compound ― or the SiH-functional carbosiloxane dendrimer afforded by process (B) ― is addition-reacted with alkenyl-functional trialkoxysilane in the presence of a platinum transition metal catalyst to give the alkoxy-functional carbosiloxane dendrimer.

### Process (B)

In this process, the alkoxy-functional carbosiloxane dendrimer afforded by process (A) is reacted with a disiloxane with the general formula 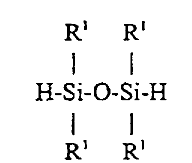 (R¹ is defined as above)
under acidic conditions to give the SiH-functional carbosiloxane dendrimer.

### Process (C)

This process yields a carbosiloxane dendrimer by the addition reaction of the aforementioned starting silicon compound ― or the SiH-functional carbosiloxane dendrimer afforded by process (B) ― with an alkenyl-functional organosiloxysilane with the following general formula 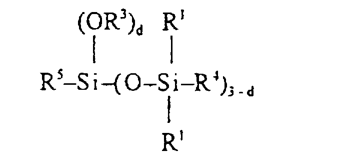 (R¹ R³, and R⁴ are defined as above; R⁵ is C₂ to C₁₀ alkenyl; and **d** is a number from 0 to 2) in the presence of a platinum transition metal catalyst.

### Process (D)

This process yields carbosiloxane dendrimer by the addition reaction, in the presence of a platinum transition metal catalyst, between the SiH-functional carbosiloxane dendrimer produced in process (B) and an alkenyl-functional hydrocarbon compound containing no more than 10 carbons, e.g., 1-butene, 1-hexene, and 1-octene.

The alkenyl-functional trialkoxysilane used in process (A) is exemplified by vinyltrimethoxysilane, vinyltriethoxysilane, and hexenyltrimethoxysilane. The platinum transition metal catalyst used in processes (A), (C), and (D) is exemplified by chloroplatinic acid, alcohol-modified chloroplatinic acid, platinum-olefin complexes, and platinum-diketonate complexes. The disiloxane used in process (B) and having the general formula provided under process (B) can be exemplified by 1,1,3,3-tetramethyldisiloxane and 1,3-dimethyl-1,3-diphenyldisiloxane. The acid used to produce the acidic milieu in process (B) can be exemplified by hydrochloric acid, sulfuric acid, carboxylic acids, and sulfonic acids. In addition, the carbosiloxane dendrimer product afforded by process (B) may contain small amounts of the following monoalkoxysiloxy group 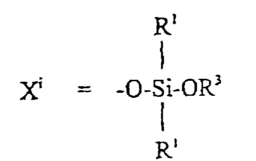 due to alcoholysis of the silicon-bonded hydrogen in this process. The alkenyl-functional organosiloxysilane used in process (C) and having the general formula provided under process (C) is exemplified by vinyltris(trimethylsiloxy)silane and vinyltris(dimethylphenylsiloxy)silane. The above described preparative method can be used to synthesize carbosiloxane dendrimers ranging from low to high molecular weights.

The particular non-radically-polymerizable substituent present at the terminal of carbosiloxane dendrimer of the present invention can also be converted to another non-radically-polymerizable substituent. For example, when the non-radically-polymerizable substituted hydrocarbon group is a halogen-substituted hydrocarbon group, the halogen atom can be converted by known methods to the amino group, mercapto group, or a group containing a carboxylic acid ester linkage.

The carbosiloxane dendrimer of this invention contains 1 non-radically-polymerizable substituted hydrocarbon group in its molecule. More specifically, carbosiloxane dendrimer of the invention that carries a condensation-reactive group has the ability to readily bond the carbosiloxane dendrimer structure to the surface of resin moldings and in pendant position in the molecular structure of various condensation-type organic resins, thereby conferring such properties as water repellency and a high gas permeability. When in particular the non-radically-polymerizable group is a reactive group such as the epoxy group, alcoholic hydroxyl group, or phenolic hydroxyl group, the carbosiloxane dendrimer can be used as an improver or modifier for organic resins and paints by exploiting this reactivity. A carbosiloxane dendrimer according to this invention that contains a nonreactive substituted hydrocarbon group, such as a fluoroalkyl group, can be used as a compatibilizer for various organic resins and as a surfactant The following examples are given only for illustrative purposes without limiting the scope

### EXAMPLES

In the examples, the carbosiloxane dendrimer according to this invention was identified by ²⁹Si-nuclear magnetic resonance analysis and gel permeation chromatographic analysis (solvent: toluene).

### Example 1

105.6 g vinyltris(trimethylsiloxy)silane and 7 mg of a toluene solution of a platinum-divinyltetramethyldisiloxane complex (platinum concentration = 2 weight%) were introduced into a 200-mL four-neck flask equipped with a stirrer, thermometer, reflux condenser, and an addition funnel and heated to 100°C while stirring. To this was then gradually added 30.3 g chloropropyltris(dimethylsiloxy)silane dropwise from the addition funnel so as to maintain the reaction temperature at 100°C. After completion of the addition, the reaction solution was heated for an additional 1 hour at 120°C. After cooling, the reaction solution was concentrated under reduced pressure to give 114.6 g of a colorless and transparent liquid. Analysis of this liquid by ²⁹Si-nuclear magnetic resonance analysis confirmed it to be a carbosiloxane dendrimer with the following average molecular formula.

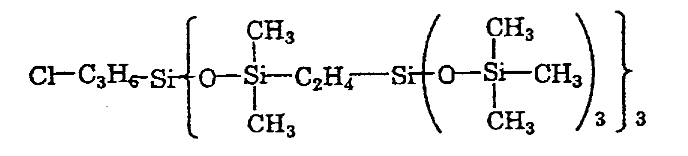

Using gel permeation chromatography, this carbosiloxane dendrimer was found to have a number-average molecular weight of 1,797 (polystyrene basis) and a dispersity index of 1.06.

### Example 2

122.3 g vinyltrimethoxysilane and 50 mg 3% isopropanolic chloroplatinic acid solution were introduced into a 300-mL four-neck flask equipped with a stirrer, thermometer, reflux condenser, and an addition funnel and heated to 70°C while stirring. 87.7 g 3,3,3-trifluoropropyltris(dimethylsiloxy)silane was then gradually added dropwise from the addition funnel so as to maintain the reaction temperature at 75°C. After completion of the addition, the reaction solution was heated for an additional 2 hours at 80°C. After cooling, the reaction solution was concentrated under reduced pressure to give 197.6 g of a colorless and transparent liquid (intermediate A).

90.7 g 1,1;3,3-tetramethyldisiloxane, 33.2 g isopropyl alcohol. 25.5 g concentrated hydrochloric acid, and 42.1 g water were subsequently placed in a 500-mL four-neck flask equipped with a stirrer, thermometer, reflux condenser, and an addition funnel and were stirred. 79.5 g intermediate A was then added dropwise from the addition funnel over 20 minutes. After the completion of addition, the reaction solution was stirred for 1 additional hour. The reaction solution was then transferred to a separatory funnel, the lower layer was separated off, and the remaining upper layer solution was washed twice with 50 mL water and then once with 50 mL saturated aqueous sodium bicarbonate solution and was finally dried over anhydrous sodium sulfate. After drying, the resulting solids were filtered off and the obtained solution was concentrated under reduced pressure to yield 79.7 g of a colorless and transparent liquid.

Analysis of this liquid by ²⁹Si-nuclear magnetic resonance analysis confirmed it to be a SiH-functional carbosiloxane dendrimer with the following average molecular formula.

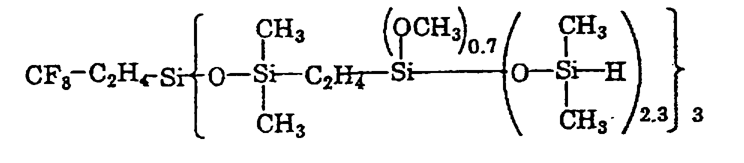

Using gel permeation chromatography, this carbosiloxane dendrimer was found to have a number-average molecular weight of 1,606 (polystyrene basis) and a dispersity index of 1.05.

### Example 3

41.9 g vinyltriethoxysilane and 35 mg 3% isopropanolic chloroplatinic acid solution were introduced into a 200-mL four-neck flask equipped with a stirrer, thermometer, reflux condenser, and an addition funnel and heated to 80°C while stirring. 31.9 g of the SiH-functional carbosiloxane dendrimer synthesized in Example 2 was then gradually added dropwise from the addition funnel so as to maintain the reaction temperature at 80°C. After completion of the addition, the reaction solution was heated for 1 additional hour at 80°C and then for another 1 hour at 100°C. After cooling, the reaction solution was concentrated under reduced pressure to give 66.7 g of a colorless and transparent liquid.

Analysis of this liquid by ²⁹Si-nuclear magnetic resonance analysis confirmed it to be a carbosiloxane dendrimer with the following average molecular formula.

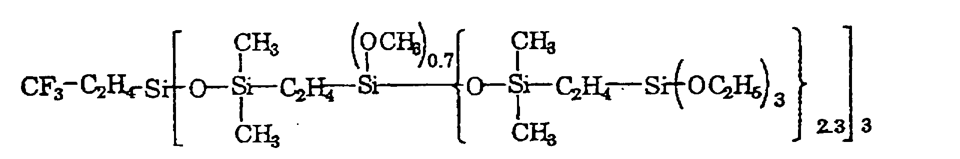

Using gel permeation chromatography, this carbosiloxane dendrimer was found to have a number-average molecular weight of 3,001 (polystyrene basis) and a dispersity index of 1.05.

### Example 4

71.1 g vinyltris(trimethylsiloxy)silane and 50 mg 3% isopropanolic chloroplatinic acid solution were introduced into a 200-mL four-neck flask equipped with a stirrer, thermometer, reflux condenser, and an addition funnel and heated to 80°C while stirring. 31.9 g of the SiH-functional carbosiloxane dendrimer synthesized in Example 2 was then gradually added dropwise from the addition funnel so as to maintain the reaction temperature at 80°C. After completion of the addition, the reaction solution was heated for an additional 1 hour at 80°C and then for another 1 hour at 100°C. After cooling. the reaction solution was concentrated under reduced pressure to give 89.8 g of a colorless and transparent liquid.

Analysis of this liquid by ²⁹Si-nuclear magnetic resonance analysis confirmed it to be carbosiloxane dendrimer with the following average molecular formula.

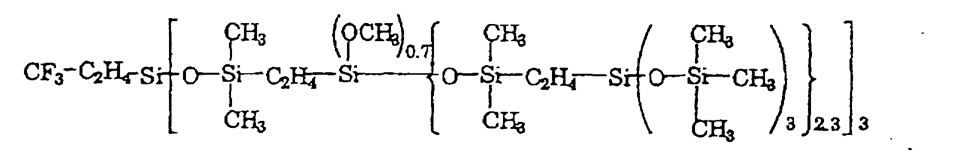

Using gel permeation chromatography, this carbosiloxane dendrimer was found to have a number-average molecular weight of 4,023 (Polystyrene basis) and a dispersity index of 1.05.

### Example 5

200 g tetrakis(dimethylsiloxy)silane and 10 mg of a toluene solution of a platinum-divinyltetramethyldisiloxane complex (platinum concentration = 2 weight%) were introduced into a 300-mL four-neck flask equipped with a stirrer, thermometer, reflux condenser, and an addition funnel and heated to 90°C while stirring. 6.9 g allyl glycidyl ether was gradually added dropwise from the addition funnel so as to maintain the reaction temperature at 90°C. After completion of the addition, the reaction solution was heated for an additional 1 hour at 100°C. After cooling, the reaction solution was concentrated under reduced pressure to give 31.3 g of a colorless and transparent liquid.

Analysis of this liquid confirmed it to be the compound (intermediate B) with the following structural formula.

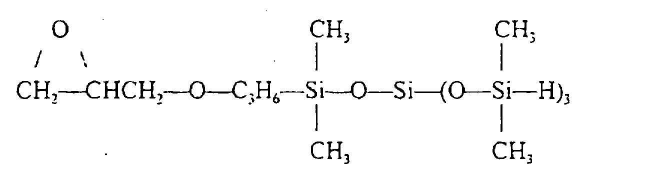

65.6 g vinyltris(trimethylsiloxy)silane and 5 mg of a toluene solution of a platinum-divinyltetramethyldisiloxane complex (platinum concentration = 2 weight%) were introduced into a 200-mL four-neck flask equipped with a stirrer, thermometer, reflux condenser, and an addition funnel and heated to 100°C while stirring. 25.0 g intermediate B was gradually added dropwise from the addition funnel so as to maintain the reaction temperature at 100°C. After completion of the addition, the reaction solution was heated for an additional I hour at 120°C. After cooling, the reaction solution was concentrated under reduced pressure to give 60.8 g of a colorless and transparent liquid.

Analysis of this liquid by ²⁹Si-nuclear magnetic resonance analysis confirmed it to be carbosiloxane dendrimer with the following average molecular formula.

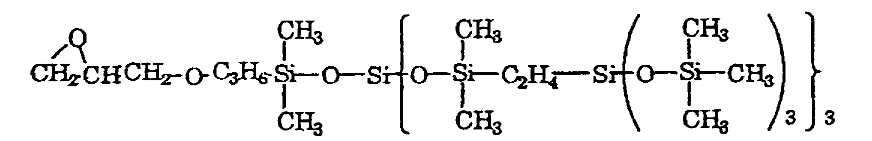

Using gel permeation chromatography, this carbosiloxane dendrimer was found to have a number-average molecular weight of 2,136 (polystyrene basis) and a dispersity index of 1.17.

### Example 6

57.3 g diphenolic acid, 30.6 g 2-allyloxyethanol, 0.2 g p-toluenesulfonic acid monohydrate, and 50.0 g toluene were introduced into a 200-mL four-neck flask equipped with a stirrer, thermometer, water separator tube (fitted with a reflux condenser), and addition funnel and heated under reflux for 3 hours while removing the evolved water. After cooling, the reaction solution was transferred to a 500-mL separatory funnel to which 100 g ethyl acetate was also added. The resulting solution was washed 3 times with 50 mL saturated aqueous sodium bicarbonate solution and 2 times with water. The resulting organic layer was dried over anhydrous magnesium sulfate, after which the solid was filtered off and the resulting solution was concentrated under reduced pressure. This gave 70.1 g of a thick yellowish brown liquid. The results of analysis showed this liquid to be 2-allyloxyethyl diphenolate. 33.4 g of this 2-allyloxyethyl diphenolate, 29.1 g hexamethyldisilazane, and 33.4 g ethyl acetate were then introduced into a 200-mL four-neck flask fined with a stirrer, thermometer, water separation tube (fitted with a reflux condenser); and addition funnel and were heated for 3 hours under reflux while stirring. Cooling and concentration under reduced pressure then gave 45.3 g of a transparent, orange brown liquid. The results of analysis confirmed this liquid to be a compound with the following structural formula (intermediate C).

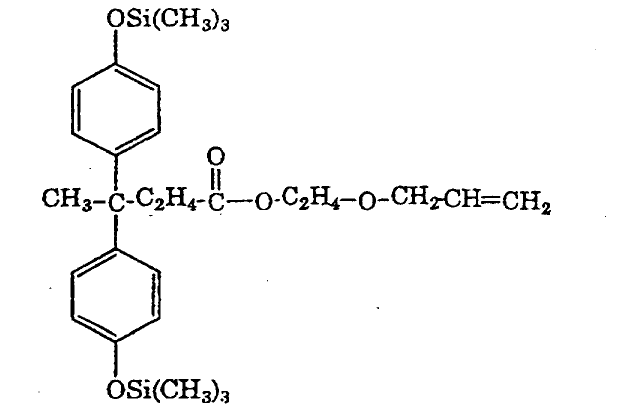

65.8 g tetrakis(dimethylsiloxy)silane and 5 mg of a toluene solution of a platinum-divinyltetramethyldisiloxane complex (platinum concentration = 2 weight%) were introduced into a 200-mL four-neck flask equipped with a stirrer, thermometer, reflux condenser, and addition funnel and heated to 100°C while stirring. 10.3 g intermediate C was then gradually added dropwise from the addition funnel so as to maintain the reaction temperature at 100°C. After completion of the addition, the reaction solution was heated for an additional 1 hour at 100°C. After cooling, the unreacted tetrakis(dimethylsiloxy)silane was removed by distillation under reduced pressure. 21.3 g vinyltris(trimethylsiloxy)silane was then added to the residual reaction solution followed by heating for 2 hours at 100°C. After cooling; the unreacted vinyltris(trimethylsiloxy)silane was removed by distillation under reduced pressure. 10.0 g methanol and 1.0 g diethylamine were added to the resulting reaction solution followed by stirring for 24 hours at room temperature. The low boilers were subsequently removed by distillation under reduced pressure to give 31.8 g of a transparent yellowish brown liquid.

Analysis of this liquid by ²⁹Si-nuclear magnetic resonance analysis confirmed it to be carbosiloxane dendrimer with the following average molecular formula.

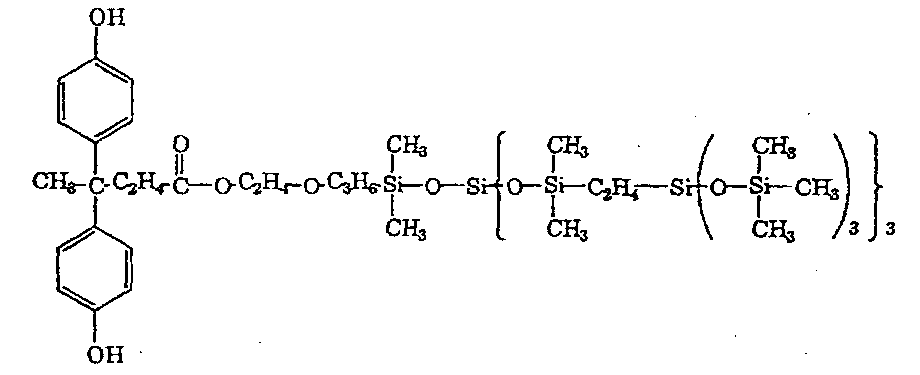

## Claims

1. A carbosiloxane dendrimer having the general formula 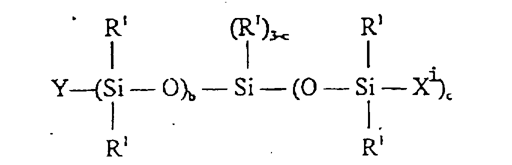 wherein Y is a non-radical-polymerizable substituted hydrocarbon group, R¹ is C₁ to C₁₀ alkyl or aryl, b is from 0 to 50, c is from 1 to 3, and X¹ is a silyalkyl group with the following formula at i = 1 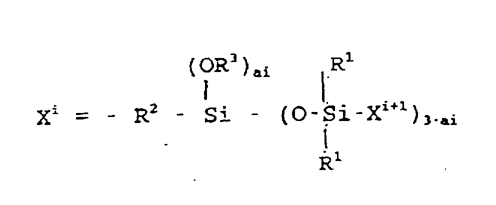 wherein R¹ is as describe above; R² is C₂ to C₁₀ alkylene; and R³ is C₁ to C₁₀ alkyl;
Xⁱ⁺¹ is selected from the group consisting of a hydrogen atom, C₁ to C₁₀ alkyl, aryl,. and a silyalkyl group; i is an integer with a value from 1 to 10; and aⁱ is from 0 to 3, with the proviso that a¹ in at least one X¹ in each molecule is from 0 to 2.

2. The carbosiloxane dendrimer of claim 1, wherein Y is a hydrocarbon group substituted by a substituent selected from the group consisting of a halogen atom and a group selected from the group consisting of an alcoholic hydroxyl group, a phenolic hydroxyl group, an amino group, a mercapto group, a carboxyl group, a nitrile group, a cyclic ether-containing group, a noncyclic ether-containing group, a ketone-containing group, and groups that contain a carboxylic acid ester linkage.

3. The carbosiloxane dendrimer of claims 1-2, wherein i is 1 and the carbosiloxane dendrimer has the general formula: 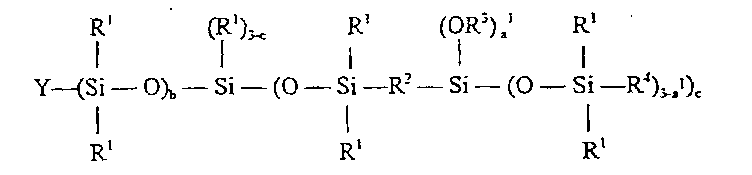 wherein Y, R¹, R², R³, b and c are as defined above, R⁴ is selected from the group consisting of a hydrogen atom and C₁ to C₁₀ alkyl, or aryl, a¹ is a number from 0 to 3, and with the proviso that at least 1 a¹ is a number from 0 to 2.

4. The carbosiloxane dendrimer of claims 1-2, wherein i is 2 and the carbosiloxane dendrimer has the general formula 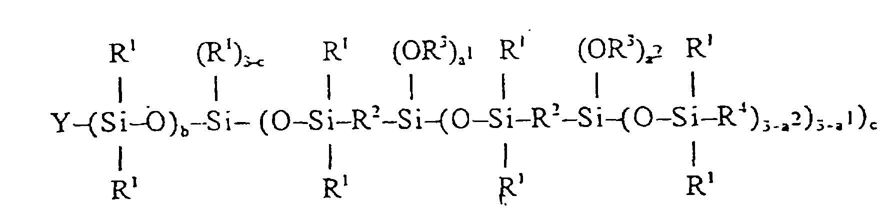 wherein Y, R¹, R², R³, R⁴, b, and c are defined as above; a¹ and a² are numbers from 0 to 3; and at least 1 a¹ is a number from 0 to 2.

5. The carbosiloxane dendrimer of claims 1-2, wherein i is 3 and the carbosiloxane dendrimer has the general formula 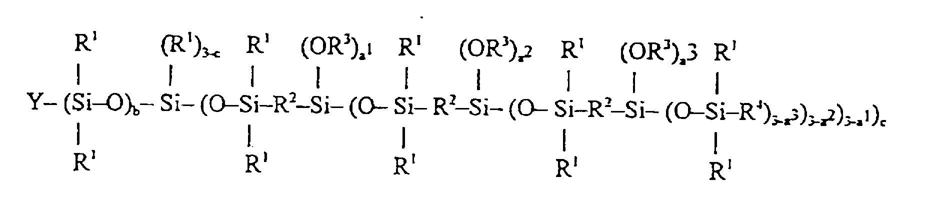 wherein Y, R¹, R², R³, R⁴, b, and c are defined as above; a¹ a² and a³ are numbers from 0 to 3; and at least one aⁱ is a numbers from 0 to 2.

6. The carbosiloxane dendrimer of claims 1-5, wherein the carbosiloxane dendrimer is a polymer selected from the group consisting of: 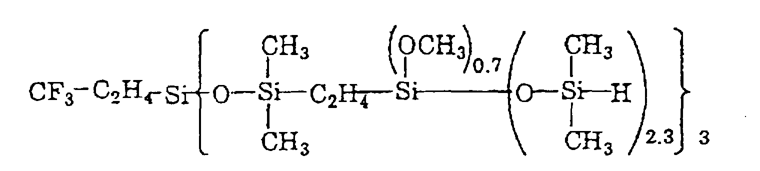 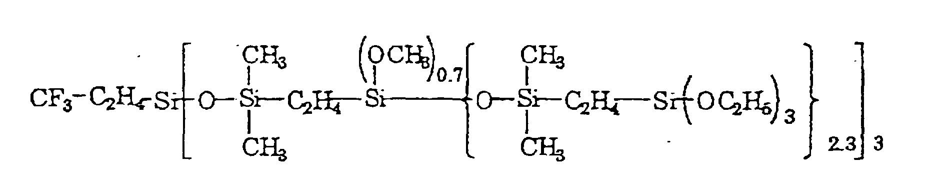 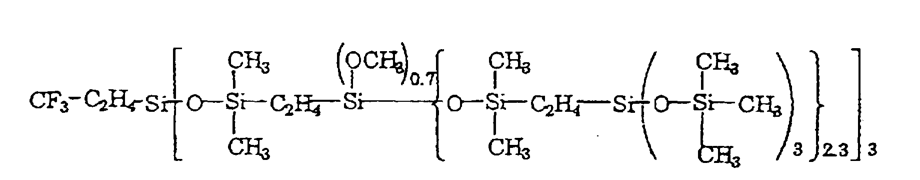 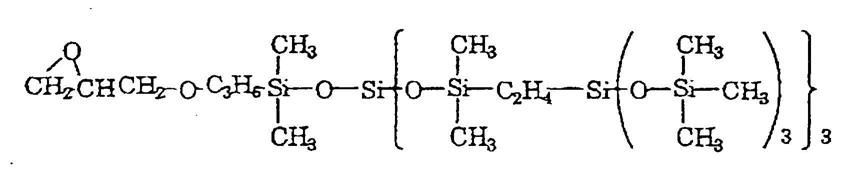 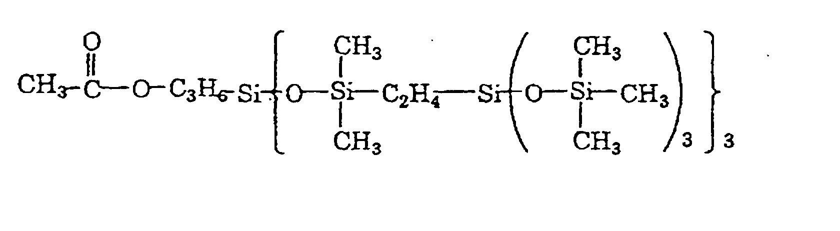 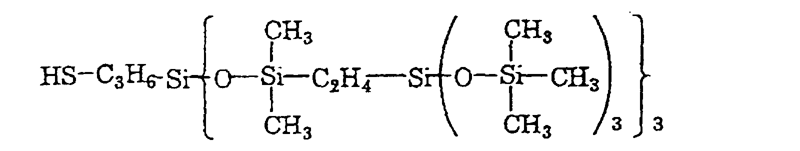 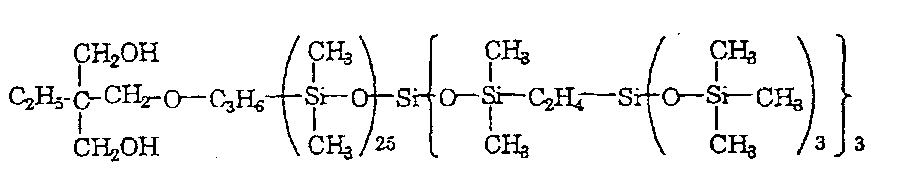 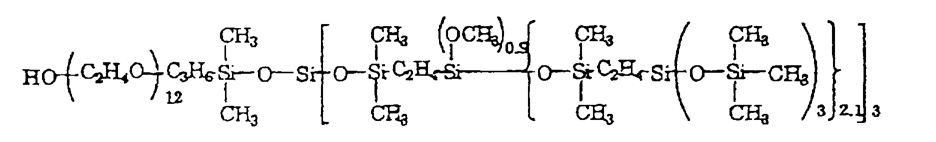 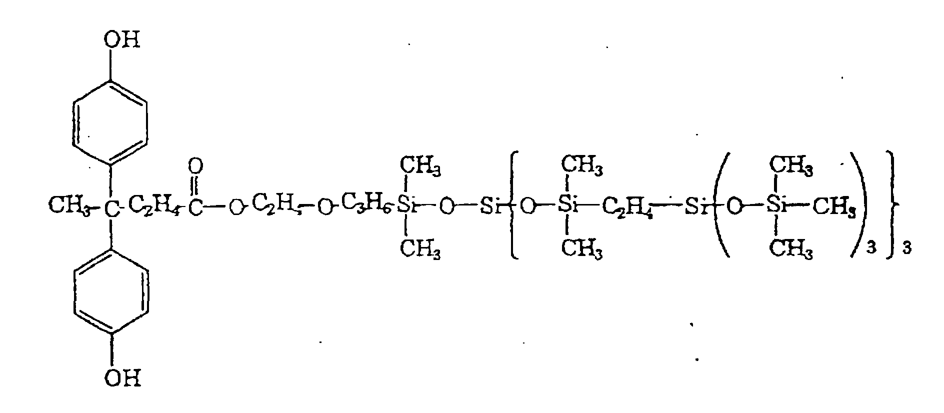 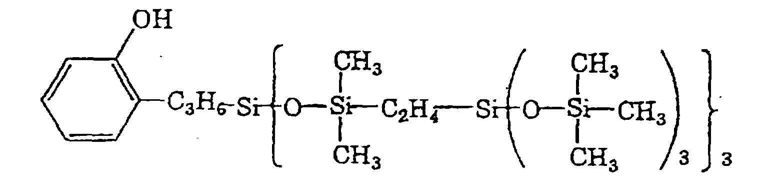 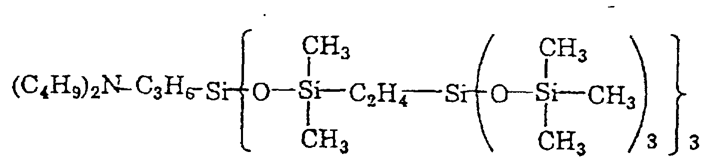 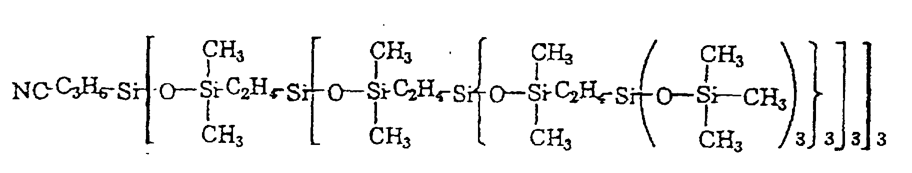 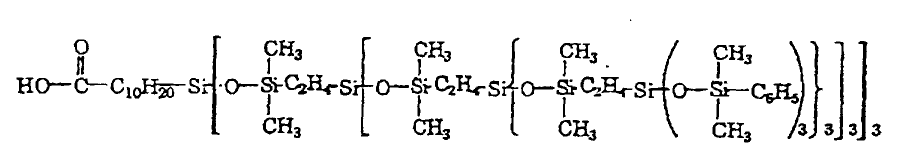 and

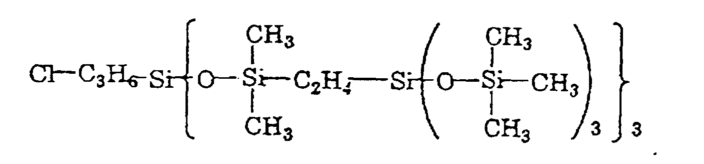

7. The carbosiloxane dendrimer of claims 1-6, whose molecular weight, determined on a polystyrene basis, has a dispersity indew no greater than 2.
